## Europäisches Patentamt

## European Patent Office

## Office européen des brevets

(11) Publication number: **0 246 894**
**B1**

(12) **EUROPEAN PATENT SPECIFICATION**

(45) Date of publication of patent specification: **08.08.90**

(21) Application number: **87304520.7**

(22) Date of filing: **21.05.87**

(51) Int. Cl.⁵: **F 16 L 5/02, H 02 G 3/22**

(54) Feedthrough.

(30) Priority: **22.05.86 GB 8612492**

(43) Date of publication of application:
**25.11.87 Bulletin 87/48**

(45) Publication of the grant of the patent:
**08.08.90 Bulletin 90/32**

(84) Designated Contracting States:
**AT BE CH DE ES FR GB IT LI NL SE**

(56) References cited:
**EP-A-0 154 027**
**EP-A-0 181 945**
**DE-A-1 807 032**
**DE-A-2 743 093**
**DE-A-3 318 632**
**DE-A-3 422 793**
**DE-B-1 803 726**
**DE-B-2 901 268**

(73) Proprietor: **N.V. RAYCHEM S.A.**
**Diestsesteenweg 692**
**B-3200 Kessel-lo (BE)**

(72) Inventor: **Becker, Karlheinz**
**Brehmstrasse 72**
**D-4700 Hamm (DE)**
Inventor: **Herr, Gernot**
**Gimpelstrasse 6**
**D-8206 Bruckmuehl (DE)**
Inventor: **Goetze, Klaus-Peter, Dr.**
**Frauenhuhstrasse 5A**
**D-8011 Vaterstetten (DE)**
Inventor: **Vandeputte, Filip Willy Antoon**
**Berkendreef 2**
**B-3128 Baal (BE)**

(74) Representative: **Benson, John Everett et al**
**Raychem Limited Intellectual Property Law**
**Department Faraday Road Dorcan**
**Swindon, Wiltshire SN3 5HH (GB)**

Courier Press, Leamington Spa, England.

## Description

The present invention relates to a feedthrough for sealing of supply lines such as pipes or cables passing through a duct in a wall, bulkhead or similar structure.

Supply lines are often installed in environments that are prone to contaminants such as moisture, dust, insects and gasses, and therefore some form of seal has to be provided between the supply line and a duct through which it passes, to prevent ingress of the contaminants through the passage.

The term "feedthrough" is well known in the art of passing supply lines through walls. Typically a feedthrough comprises a hollow member which is preinstalled in a duct in a wall or bulkhead (which may be a wall of a building or of, for example a manhole) to provide a passage for later installation of supply lines through the wall or bulkhead.

The present invention provides a feedthrough for providing a seal between a duct and a supply line, which comprises a sealing portion and a tubular portion, characterized in that:

a) the sealing portion is for sealing to the inside of the duct towards a first end thereof, and comprises an expandable tubular sealing member, and resilient biassing means having at least two stable positions and which can be operated after positioning the feedthrough in the duct to force the sealing member into sealing contact with the inside of the duct; and

b) the tubular portion is flexible and extends from the said sealing portion into the duct such that the supply line passes through the tubular portion, and can be stretched or compressed axially so as to vary the overall length of the feedthrough.

DE—A—3422793 discloses a wall feedthrough comprising a helically ribbedpipe and collars, between pairs of which collars a sealing material can be compressed to cause it to form a seal between the pipe and a duct within which the pipe lies. EP—A—0181945 also discloses a feedthrough having a helical outer surface.

Preferably, the feedthrough comprises two sealing portions for sealing to the inside of the duct at opposite ends thereof, the flexible portion extending between the sealing portions. More preferably the two sealing portions are both as specified above although it is envisaged that the two sealing portions may be different.

The presence of the flexible portion allows the overall length of the feedthrough to be varied. By selection of an appropriate length, the feedthrough can therefore be used in ducts having a range of lengths. The flexible portion of the feedthrough may comprise a length of tubing in which the wall is formed as a series of alternating radially extending ridges and valleys, hereinafter referred to as convoluted tubing. Convoluted tubing is for example preferably made by moulding, especially by blow moulding. Alternatively, the flexible portion of the feedthrough may comprise a plurality of telescopable tubes. Preferably the gap between adjacent tubes is sealable when the article is installed.

The flexibility of the flexible portion of the feedthrough will generally be important. When the flexible portion comprises a length of convoluted tubing, this will depend on the geometry of the convolutions, on the number of convolutions and on the nature of the material from which the flexible portion is made. The degree of available extensibility or compressibility is conveniently quoted as a ratio between the maximum and minimum nominal lengths of the convoluted tubing. By these nominal lengths we mean what would be the length if the convoluted tubing were extended so that the convolutions disappeared, and what would be the length if the convolutions were fully bunched together. The material of the convoluted tubing may of course be such that these lengths could not be achieved without the use of forces so large that the article would be damaged. The ratio between these nominal lengths is preferably from 2:1 to 6:1, mcre preferably about 4.5:1, since such values allow the feedthrough to be used in ducts having a wide range of lengths. In addition to these preferred extents of extension and compression, it is preferred that the force required is low enough for the extension or compression to be effected easily by hand.

Preferably, the sealing portion of the feedthrough is provided with a sleeve for engaging a supply line passing through the feedthrough. Preferably, the sleeve is dimensionally recoverable to engage the supply line. By "dimensionally recoverable" is meant that the dimensions of the sleeve may be made to change substantially when subjected to an appropriate treatment. Heating is the preferred treatment. Usually, dimensionally recoverable articles recover towards an original shape from which they have previously been deformed but the term is also applicable to an article which adopts a new configuration even if it has not previously been deformed. In another embodiment, the sleeve may be made to engage the supply line by means of a mechanical fixing tool. Preferably sleeve is coated internally with a layer of sealing material such as an adhesive or sealant, particularly a hot-melt adhesive. The presence of the flexible portion of the feedthrough allows the or each sealing portion to be positioned so that the sealing member can be forced into contact with the inside of the duct and the sleeve can be made to engage the supply line. When the sleeve is to be recovered by external heater, or to be deformed by a mechanical fixing tool, it will generally be important that access can be gained to the sleeve, generally by ensuring that the sleeve protrudes from the duct. This is facilitated for a range of lengths of duct by the flexible portion of the feedthrough.

In a preferred embodiment, the feedthrough may be made re-enterable by arranging for only a selected section of the sleeve to engage the supply line. For example when the sleeve is recoverable inwardly onto the supply line, it may be provided with a removable support to prevent recovery of part of the sleeve when the feedthrough is installed for the first time. In a subsequent installation on a new supply line, the support can be removed, and the part of the sleeve previously supported can be recovered onto the new supply line.

The feedthrough may advantageously be provided with means for engaging the end of the duct to limit longitudinal movement of the feedthrough in the duct. For example, the feedthrough may be provided at one end with a flange or other stop means which is too wide to fit into the duct, and which, in use, engages an end face of the duct such that the sealing portion of the feedthrough is correctly positioned. At the other end of the feedthrough, a smaller flange, sized so as to pass through the duct, may be provided to be gripped at the other end of the duct, so that a sealing portion at that end of the feedthrough is correctly positioned in the duct.

The sealing portion of the feedthrough preferably comprises an expandable tubular member of polymeric material. It is preferred that the polymeric material is heat softenable, to allow deformation thereof. The cross-section of the tubular member will be selected according to the cross-section of the duct, but will generally be circular. Preferred polymeric materials include olefin polymers, especially homo- and copolymers of ethylene. The seal between the or each sealing portion of the feedthrough and the duct may be enhanced by a layer of a sealing material such as a sealant (for example a mastic) or an adhesive (for example a heat-activatable adhesive such as a reactive adhesive, or more preferably a hot-melt adhesive) provided on the outer surface of the expandable tubular member. The layer of sealing material may conveniently be coated on or otherwise affixed to the exposed surface of the feedthrough.

In another embodiment, the sealing member may be provided with radially extending ridges to engage the internal wall of the duct when the feedthrough is installed.

In order that the sealing material is not under significant peel or shear forces in the installed product, it is preferred that the polymeric material of the tubular member is substantially unstressed after operation of the resilient biassing means. By substantially unstressed we therefore mean that if any stresses remain, the net force tending to displace the article from the substrate is not significant compared to the peel and/or sheer strength of any bond between the article and the substrate. Where no bond is provided, the force exerted by the mechanical member must significantly exceed any stresses in the article which would otherwise displace it from the substrate.

The biassing means is resilient, and especially comprises one or more springs which cause or allow a radial expansion of the sealing member into sealing contact with an inside surface of the duct. It will generally be important that the biassing means may be made to change from a configuration corresponding to that of the sealing member before installation (for example a portion of a duct seal of smaller diameter) to a configuration corresponding to that of the installed sealing member (for example enlarged diameter). Although this change may be aided by heat, it must not be brought about immediately solely by heat. Thus, the sealing portion of the feedthrough may be heated away from the duct where it is to be installed without the configurational change occuring that would make it difficult or impossible to install. The heating is desirable, however, to soften the polymeric material to allow easy deformation once in position and/or to activate any sealing material that may be used. Therefore, the feedthrough is firstly heated, secondly placed in position, and thirdly the biassing means is operated either to allow or to cause the configurational change. In a preferred embodiment, the biassing means will have at least two rest or stable positions corresponding to the first and second configurations of the sealing member, one of which will cause the desired resiliently biassed engagement between the polymeric material of the sealing member and the supply line. This bias need not result from resilience in the biassing means, but could result from resilience in the polymeric material or in the supply line or two or more of these possibilities.

The biassing means may be an integral part of the feedthrough in the sense that it is part of the same structure as the polymeric material, or it may be mechanically affixed or bonded thereto, or it may be separate from the polymeric material and optionally provided as a re-usable tool.

Operation of the biassing means may be by hand, for example by means of a lever which protrudes to the outside of the feedthrough. Other mechanisms, however, may be employed for example an electrical release or a mechanism triggered by heat. In this third case melting or softening of a fusible or softenable material could allow a resiliently deformed member to relax. Thus, the feedthrough would be heated to soften the sealing member or to activate an adhesive, then positioned in a duct, and then an accessible part further heated to trigger the fusible or softenable release. In a modification of this technique, a single heating step could provide the softening or adhesive activation and also activate the trigger; in this case, however, release that causes alteration of the biassing means would be delayed in order that the feedthrough could be inserted into the duct.

Mechanical biassing means, such as a casing which is expandable by a screw thread arrangement, are also envisaged.

For operation of the biassing means after positioning the feedthrough in the duct, the biassing means will preferably be operable from outside the feedthrough. This may be achieved for example by means of a lever or other operating means extending through the supply line outlet of the feedthrough (or one of the outlets if there is more than 1). Alternatively, the operating means could pass through a hole in a side or end wall of the feedthrough provided specially for that purpose. Another preferred arrangement is disclosed and claimed in UK patent applicatiion no. 8609089, and provides an insert which can be positioned between the duct and the sealing portion of the feedthrough of this invention, through which the biassing means can be operated externally of the feedthrough.

The sealing member of the feedthrough is analogous in many respects to the duct seal and to the article for sealing a substrate, which are disclosed and claimed in EP—A—170657. Reference may be made to that application for further elucidation of aspects of the sealing member.

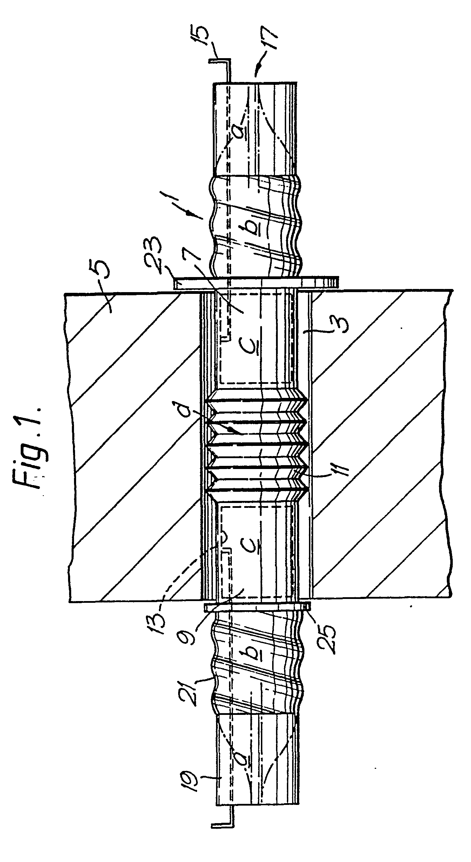

An embodiment of the feedthrough according to this invention will now be described by way of example with reference to the accompanying drawing, in which Figure 1 is a sectional elevation through the feedthrough positioned in a duct.

Referring to the drawing, Figure 1 shows a feedthrough 1 positioned in a duct 3 in a wall 5. The feedthrough comprises two substantially identical sealing portions 7, 9 joined by a flexible portion 11. The sealing portions 7, 9 comprise an expandable tubular member of heat-softenable polymeric material, coated with a layer of sealing material. The flexible portion 11 of the feedthrough comprises a length of convoluted tubing 11 by means of which the length of the feedthrough between the expandable tubular sealing portions 7, 9 can be varied. Within the expandable tubular members 7, 9, biassing means 13 are positioned. The biassing means take the form of springs of a metal such as steel or berylium-copper. The springs are operated from outside the feedthrough by means of levers 15, extending through the supply line outlets 17. The levers are removable after use. The sealing portions of the feedthrough are provided with sleeves for sealing onto a supply line such as a cable or a pipe. The sleeves comprise heat-shrinkable polymeric material, and have a shrinkable portion 19 and a portion 21 that is held out by means of a helical support. The held out portion allows the feedthrough to be used more than once, as described above. During installation, the feedthrough is heated to soften the polymeric material of the sealing members, and is then passed through the duct 3, from right to left as shown until the large flange 23 abuts the end face of the duct. The feedthrough is then either extended or compressed axially until the small flange 25 is flush with the other end face of the duct. Operation of the springs 13 by means of levers 15 causes the sealing member to expand into sealing contact with the wall, the expansion being facilitated by the heat softening of the polymeric material. After the supply line has been passed through the feedthrough, the shrinkable portions 19 of the sleeve are heated to seal onto the supply line, as shown in dotted outline. The lengths of shrinkable portion 19 and held-out portion 21 of the heat-shrinkable sleeve are denoted by references a and b in the Figure. Similarly the lengths of the expandable tubular portions are denoted by reference c and the length of convoluted section by reference d. Typical values for these lengths are as follows:

a  50 mm

b  50 mm

c  70 mm

d 350 mm

## Claims

1. A feedthrough (1) for providing a seal between a duct (3) and a supply line, which comprises a sealing portion (7, 9) and a tubular portion, characterized in that:

a) the sealing portion (7, 9) is for sealing to the inside of the duct (3) towards a first end thereof, and comprises an expandable tubular sealing member, and resilient biassing means (13) having at least two stable positions and which can be operated after positioning the feedthrough (1) in the duct (3) to force the sealing member into sealing contact with the inside of the duct (3); and

b) the tubular portion (11) is flexible and extends from the said sealing portion into the duct (3) such that the supply line passes through the tubular portion (11), and can be stretched or compressed axially so as to vary the overall length of the feedthrough (1).

2. A feedthrough as claimed in claim 1, which comprises a second sealing portion for sealing to the inside of the duct at a second end thereof, opposite said first end, the flexible portion extending between the first and second sealing portions.

3. A feedthrough as claimed in claim 2, in which the construction of the first and second sealing portions is substantially the same.

4. A feedthrough as claimed in any one of the preceding claims, in which the sealing portion comprises heat-softenable polymeric material.

5. A feedthrough as claimed in any one of the preceding claims in which the or each sealing member comprises a layer of sealing material, positioned so as to form a seal between the feedthrough and the duct.

6. A feedthrough as claimed in any one of the preceding claims, in which the sealing portion of the feedthrough comprises a sleeve, preferably a heat-recoverable sleeve, for engaging a supplyline.

7. A feedthrough as claimed in any one of the preceding claims, in which the flexible portion of the feedthrough comprises a length of convoluted tubing, or a plurality of telescopable tubes.

8. A feedthrough as claimed in any one of the preceding claims, in which the resilient biassing means comprises wrapped sheet of spring metal.

9. A feedthrough as claimed in any one of the preceding claims, which comprises means for limiting longitudinal movement of the feedthrough in the duct which limiting means preferably comprises a flange or engaging an end face of the duct.

## Patentansprüche

1. Durchführung (1) zur Bildung einer Abdichtung zwischen einer Rohrleitung (3) und einer Versorgungsleitung, welche einen Dichtungsbereich (7, 9) und einen rohrförmigen Bereich aufweist, dadurch gekennzeichnet, daß:

(a) der Dichtungsbereich (7, 9) zum Abdichten zur Innenseite der Rohrleitung (3) zu einem ersten Ende von ihr dient und ein expandierbares rohrförmiges Dichtungsteil sowie eine elastische Vorspannungseinrichtung (13) aufweist, die mindestens zwei stabile Positionen hat und die betätigt werden kann nach dem Positionieren der Durchführung (1) in der Rohrleitung (3), um das Dichtungteil in abdichtenden Kontakt mit der Innenseite der Rohrleitung (3) zu zwingen; und

(b) der rohrförmige Bereich (11) flexibel ist und sich von dem abdichtenden Bereich in die Rohrleitung (3) hinein erstreckt, so daß die Versorgungsleitung durch den rohrförmigen Bereich (11) hindurchgeht, und in axialer Richtung gestreckt oder zusammengedrückt werden kann, um die Gesamtlänge der Durchführung (1) zu variieren.

2. Durchführung nach Anspruch 1, welche einen zweiten Dichtungsbereich zum Abdichten zur Innenseite der Rohrleitung an einem zweiten Ende von ihr, entgegengesetzt zum ersten Ende, aufweist, wobei der flexible Bereich sich zwischen den ersten und zweiten Dichtungsbereichen erstreckt.

3. Durchführung nach Anspruch 2, bei der der Aufbau der ersten und zweiten Dichtungsbereiche im wesentlichen der gleiche ist.

4. Durchführung nach einem der vorherigen Ansprüche, bei der der Dichtungsbereich durch Wärme erweichbares polymeres Material aufweist.

5. Durchführung nach einem der vorherigen Ansprüche, bei der das oder jedes Dichtungsteil eine Schicht aus Dichtungsmaterial aufweist, das so angeordnet ist, daß es eine Abdichtung zwischen der Durchfuhrung und der Rohrleitung bildet.

6. Durchführung nach einem der vorherigen Ansprüche, bei der der Dichtungsbereich der Durchführung eine Buchse, vorzugsweise eine wärmerückstellbare Buchse zum Eingriff mit einer Versorgungsleitung aufweist.

7. Durchführung nach einem der vorherigen Ansprüche, bei der der flexible Bereich der Durchführung eine Länge aus einem Wellrohr oder eine Vielzahl von teleskopierbaren Rohren aufweist.

8. Durchführung nach einem der vorherigen Ansprüche, bei der die elastische Vorspannungseinrichtung ein herumgewickeltes Blech aus Federmetall aufweist.

9. Durchführung nach einem der vorherigen Ansprüche, welche eine Einrichtung zur Begrenzung der Bewegung der Durchführung in der Rohrleitung in Längsrichtung aufweist, wobei die Begrenzungseinrichtung vorzugsweise einen Flansch zum Eingriff mit einer Stirnseite der Rohrleitung aufweist.

## Revendications

1. Traversée (1) pour former un joint étanche entre un conduit (3) et une ligne d'alimentation, qui comprend une partie (7, 9) d'étanchéité et une partie tubulaire, caractérisée en ce que:

a) la partie d'étanchéité (7, 9) est destinée à s'appliquer de façon étanche contre l'intérieur du conduit (3) vers une première extrémité de celui-ci, et comprend un élément tubulaire expansible d'étanchéité, et un moyen élastique (13) de rappel ayant au moins deux positions stables et pouvant être actionné après le positionnement de la traversée (1) dans le conduit (3) afin d'amener à force l'élément d'étanchéité en contact étanche avec l'intérieur du conduit (3); et

b) la partie tubulaire (11) est flexible et s'étend depuis ladite partie d'étanchéité vers l'intérieur du conduit (3) afin que la ligne d'alimentation passe dans la partie tubulaire (11), et elle peut être étirée ou comprimée axialement pour faire varier la longueur globale de la traversée (1).

2. Traversée selon la revendication 1, qui comprend une seconde partie d'étanchéité destinée à s'appliquer de manière étanche contre l'intérieur du conduit à une seconde extrémité de celui-ci, opposée à ladite première extrémité, la partie flexible s'étendant entre les première et seconde parties d'étanchéité.

3. Traversée selon la revendication 2, dans laquelle la construction des première et seconde parties d'étanchéité est sensiblement la même.

4. Traversée selon l'une quelconque des revendications précédentes, dans laquelle la partie d'étanchéité comprend une matière polymérique pouvant être ramollie par la chaleur.

5. Traversée selon l'une quelconque des revendications précédentes, dans laquelle le ou chaque élément d'étanchéité comprend une couche de matière d'étanchéité disposée de façon à former un joint étanche entre la traversée et le conduit.

6. Traversée selon l'une quelconque des revendications précédentes, dans laquelle la partie d'étanchéité de la traversée comprend un manchon, avantageusement un manchon doué de reprise dimensionnelle à chaud, destiné à établir une prise sur une ligne d'alimentation.

7. Traversée selon l'une quelconque des revendications précédentes, dans laquelle la partie flexible de la traversée comprend une longueur de tube à circonvolutions, ou plusieurs tubes télescopiques.

8. Traversée selon l'une quelconque des revendications précédentes, dans laquelle le moyen élastique de rappel comprend une feuille enroulée en métal à ressort.

9. Traversée selon l'une quelconque des revendications précédentes, qui comprend des moyens destinés à limiter le mouvement longitudinal de la

**EP 0 246 894 B1**

traversée dans le conduit, lesquels moyens de limitation comprennent avantageusement une bride destinée à porter contre une face extrême du conduit.

Fig.1.

EP 0 246 894 B1